# EUROPEAN PATENT APPLICATION

(11) **EP 1 408 422 A1**
(43) Date of publication of application: **14.04.2004**
(21) Application number: 02717155.2
(22) Date of filing: 15.04.2002
(51) Int. Cl.: G06F 17/30, G06F 3/02

(54) **ELECTRIC APPARATUS AND METHOD FOR DISPLAYING ITS INSTRUCTION MANUAL INFORMATION**

(30) Priority: 31.05.2001 JP 2001165201
(71) Applicant: MATSUSHITA ELECTRIC INDUSTRIAL CO., LTD., Kadoma-shi, Osaka 571-0050 (JP)
(72) Inventor: KADOTA, Yoko, Yokohama-shi, Kanagawa 222-0003 (JP)
(74) Representative: Grünecker, Kinkeldey, Stockmair & Schwanhäusser Anwaltssozietät
(86) International application number: PCT/JP2002/003733
(87) International publication number: WO 2002/099693

(57) **Abstract**

A purpose of the present invention is to provide an electric appliance so as to perform a user manipulation of the electric appliance in a smooth manner, while easily retrieving and utilizing a content of instruction manual information of the electric appliance, and also to provide an information retrieving method of the electric appliance, a communication system, an information retrieving method in the communication system, an information retrieving program, and a recording medium.

A telephone transmission/reception unit 106 of a portable telephone 100 retrieves an item having a word entered by an input unit 103 from an electronically-processed instruction manual of a storage unit 105 of a portable telephone 100 by using the entered word, and transmits either the item or the word to a server 803. The server 803 retrieves an electrically-processed instruction manual of a storage unit 804 by employing either the received item or the received word, and transmits operation guidance obtained by this retrieving operation to the portable telephone 100. In'the portable telephone 100, the received operation guidance is displayed on a display unit 101. Then, while the operation guidance remains displayed on the display unit 101, the portable telephone 100 accepts a manipulation, or an input operation by a user according to this operation guidance by the input unit 103.

## Description

### <TECHNICAL FIELD>

The present invention is related to an electric appliance, an information retrieving apparatus of the electric appliance, a program used to execute this information retrieving method;of the electric appliance, a recording medium for recording this program, a communication system in which the electric appliance is connected to a server, a program for executing the information retrieving method of the electric appliance in this communication system, and also, a recording medium for recording thereoh this program. More specifically, the present invention is directed to an electric appliance, an information retrieving method of the electric appliance, a communication system, an information retrieving method in the communication system, an information retrieving program, and a recording medium, capable of readily retrieving/utilizing contents of instruction manual information, and capable of executing user operations of the electric appliance in a smoothing manner.

### <BACKGROUND ART>

Conventionally, instruction manuals of various sorts of electric appliances such as telephones, facsimile machines, and portable telephones have been provided as appendixes in the modes of sheets, or books when these electric appliances are purchased.

Very recently, however, as these electric appliances have been developed with multiple functions, thicknesses of instruction manuals thereof become very thick in direct proportion to these multiple functions. In particular, when portable telephones are picked up as examples, since current portable telephones are made very compact and in very light weights in order to improve portabilities thereof, a total number of operation keys provided on surfaces of these recent portable telephones is limited to a pre-selected number. Also, in order to realize compact and light-weight features and at the same time to realize multiple functions, plural functions are allocated to a single operation key. As a consequence, a plurality of operation keys are combined with each other so as to execute a single function, so that operation methods are very complex.

Also, even when instruction manuals of portable telephones are kept at hands of users, since thicknesses of these instruction manuals are very thick, the users can very hardly grasp that which item of the instruction manuals should be concretely read. Thus, even when very convenient functions for the users are provided with the portable telephones, these convenient functions could not be sufficiently utilized.

Furthermore, since the instruction manuals of the portable telephones have been provided in the forms of sheets, or books, when certain terms have elapsed after these portable telephones had been purchased, there is a risk that users lost the instruction manuals. Under such a circumstance that the instruction manuals are not kept at their hands, since the users can hardly handle even such a simple function of the portable telephones, the functions of these portable telephones are not sufficiently utilized.

As a method of solving these problems, Japanese Laid-open Patent Application No. Hei-10-73792, Japanese Laid-open Patent Application No. Hei-11-294791, and Japanese Laid-open Patent Application No. 2000-101773 disclose operation guidance representing methods. In these representing methods, while instruction manuals of electric appliances provided in electronic data forms are stored in databases managed by servers, when such electric appliances as portable telephones and facsimile machines are operated which are connected via a public communication line network to the servers, the servers are called from the electric appliances so as to retrieve the databases, and operation guidance corresponding to items desired by users is derived from the databases, and then, the derived operation guidance is displayed on display units of these electric appliances.

### <DISCLOSURE OF THE INVENTION>

In the operation guidance representing methods disclosed in the above-described publications, while the instruction manuals and the operation guidance are merely provided in the electronic data forms and are stored in the databases managed by the servers, the users may simply retrieve these instruction manuals and operation guidance from the databases. In the case that the users want to operate the electric appliances in accordance with the operation guidance displayed on the electric appliances, the users must memorize the operation guidance displayed on the display units. Otherwise, the users must write the contents of the displayed operation guidance on paper, and then the users must operate the electric appliances' while reading this paper. As a result, in the case that displayed operation guidance requires complex key operations, there is such a risk that the users cannot memorize all of these complex operation guidance displayed on the display units. Also, such a cumbersome operation of writing the contents of the displayed operation guidance on paper is forcibly requested to the users. In any cases, the users must perform very cumbersome operations in accordance with the contents of the operation guidance.

The present invention has been made to solve the above-described conventional problems, and therefore has a first object to provide an electric appliance capable of performing a user operation in accordance with an operation guidance while an instruction manual provided in an electronic data form is retrieved and then the operation guidance obtained by this retrieving operation is continuously displayed on the own electric appliance, and also capable of being operated in a smoothing manner by a user.

Also, a second object of the present invention is to provide an electric appliance operable in an easy manner by a user in such a manner that while the electric appliance displays items containing words entered by the user, or displays items corresponding to either descriptions or operation guidance, which include the words, when one item is selected as an item desired by the user from the displayed items by an input means, operation guidance of this selected item is sequentially displayed in a stepwise manner on a display means. As a consequence, even when the operation guidance of the selected item is such an operation guidance requiring complex operation, the user can easily operate the electric appliance without having any feeling of workloads given to the user.

Also, a third object of the present invention is to provide an electric appliance equipped with a storage means for storing thereinto a synonym dictionary operable in such a way that while this synonym dictionary is retrieved as to an entered word, when this word is contained in a synonym group of the synonym dictionary, since items of instruction manuals are retrieved by employing a keyword corresponding to the synonym group, even if a user does not know a formal title of a desired item, this desired item can be easily retrieved.

Also, a fourth object of the present invention is to provide a communication system operable in such a manner that while an electric appliance is arranged to be connectable via either the Internet or other communication lines to a server, since at least a portion of an instruction manual, or all parts of this instruction manual are electronically stored in a storage means included in this server, the electric appliance is not equipped with such a storage means for electronically storing the instruction manual of this electric appliance, but this instruction manual provided in the electronic data form can be retrieved.

Furthermore, a fifth object of the present invention is to provide a communication system operable in such a manner that while instruction manuals of other sorts of electric appliances are electronically stored in a storage means included in a server in addition to an instruction manual of an electric appliance, when items of the electronically-processed instruction manual of this electric appliance are retrieved by employing a word entered from this electric appliance, the electronically-processed instruction manuals as to other sorts of electric appliances different from the above-described electric appliance are retrieved by using this entered word, so that names and model numbers of other sorts of electric appliances can be introduced/displayed on this electric appliance as the retrieval result.

To solve the above-described problems, an electric appliance, according to the present invention, is featured by comprising: storage means for storing thereinto instruction manual information of the electric appliance; input means; cont'rol means for retrieving the instruction manual information of the electric appliance stored in the storage means by employing a word inputted by the input means, and for deriving a retrieval result obtained by the retrieving operation; and also display means for displaying thereon the retrieval result derived by the control means; in which the control means can input in accordance with the retrieval result by the input means while the retrieval result remains displayed on the display means.

### <BRIEF DESCRIPTION OF THE DRAWINGS>

Fig. 1 is a structural diagram for indicating a structure of a portable telephone 100 according to a first embodiment mode;
Fig. 2 is a diagram for showing a general view of the portable telephone 100 shown in Fig. 1;
Fig. 3 is an explanatory diagram for concretely exemplifying an electronically-processed instruction manual 300;
Fig. 4 is an explanatory diagram for concretely exemplifying a synonym dictionary 400;
Fig. 5 is a flow chart for describing a retrieving method of the electronically-processed instruction manual 300 in the portable telephone;
Fig. 6 is a flow chart for explaining an information retrieving method of the portable telephone 100;
Figs. 7A, 7B, 7C, and 7D are explanatory diagrams for exemplifying a stepwise display of operation guidance;
Fig. 8 is a structural diagram for indicating a structure of a communication system according to a second embodiment mode;
Fig. 9A is an explanatory diagram for explaining an electronically-processed instruction manual 900a provided with items and explanations, and Fig. 9B is an explanatory diagram for explaining an electronically-processed instruction manual 900b provided with items and operation guidance corresponding to these items;
Fig. 10 is a flow chart for explaining a retrieving method of an electronically-processed instruction manual in the communication system of the second embodiment mode;
Fig. 11 is a flow chart for explaining a retrieving method of an electronically-processed instruction manual in the communication system of the second embodiment mode; and
Fig. 12 is a flow chart for describing a retrieving method of an electronically-processed instruction manual in the communication system of the second embodiment mode.

It should be understood that in the drawings, reference numeral 100 shows a portable telephone; reference numeral 101 indicates a displaying unit; reference numeral 102 represents a control unit; reference numeral 103 denotes an input unit; reference numeral 104 shows a voice speaking/receiving unit; reference numeral 105 indicates a storage unit; reference numeral 106 represents a telephone transmission/reception unit; reference numeral 107 denotes an antenna; reference numeral 201 is a liquid crystal display panel; reference numeral 202 shows a housing; reference numeral 200 (203a to 203f) represents a function key; reference numeral 204 denotes a numeral entry key (10-character entry key); reference numeral 300 shows an electronically-processed instruction manual; reference numeral 400 represents a synonym dictionary; reference numeral 801 indicates a base station; reference numeral 802 denotes a mobile network; reference numeral 803 is a server; reference numeral 804 shows a storage unit (database); reference numeral 805 is the Internet; reference numeral 806 indicates a server; reference numeral 807 shows a storage unit (database); reference numeral 808 represents a service center; and also, reference numeral 900 indicates an electronically-processed instruction manual.

### <BEST MODE FOR CARRYING OUT THE INVENTION>

Referring now to drawings, a detailed description will be made of an electric appliance of the present invention, an information retrieving method of the electric appliance, a program used to execute the information retrieving method of the electric appliance, a recording medium for recording thereon the program, a communication system in which the electric appliance is connected to a server, an information retrieving method of an electric appliance in the communication system, a program used to execute the information retrieving method of the electric appliance in the communication system, and also a recording medium for recording thereon the program in this order of [FIRST EMBODIMENT MODE] and [SECOND EMBODIMENT MODE].

It should be understood that in an explanation of the first embodiment mode, both the electric appliance and the information retrieving method of the electric appliance, according to the present invention, will be described in detail, but however, since the program according to the present invention corresponds to the program used to execute the information retrieving method of the electric appliance and also the recording medium according to the present invention corresponds to the recording medium for recording' thereon the program used to execute the information retrieving method of the electric appliance, explanations thereof are involved the below-mentioned descriptions as to the information retrieving method of the electric appliance.

It should also be understood that in an explanation of the second embodiment mode, both the communication system and the information retrieving method of the communication system, according to the present invention, will be described in detail, but however, since the program according to the present invention corresponds to the program used to execute the information retrieving method of the communication system and also the recording medium according to the present invention corresponds to the recording medium for recording thereon the program used to execute the information retrieving method of the communication system, explanations thereof are involved the below-mentioned descriptions as to the information retrieving method of the communication system.

### [FIRST EMBODIMENT MODE]

First, as to an electric appliance according to a first embodiment mode of the present invention, a portable telephone will now be explained as one example of this electric appliance.

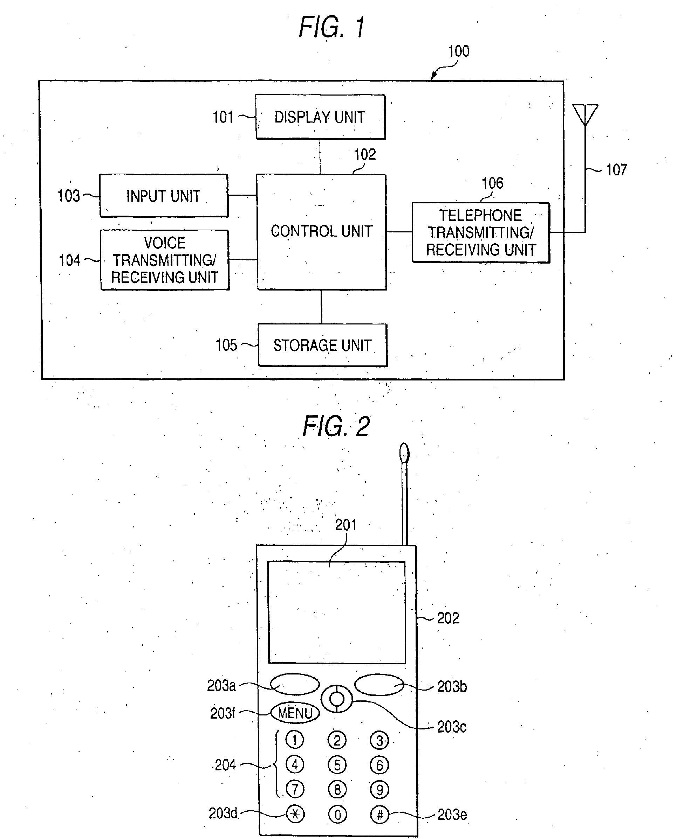

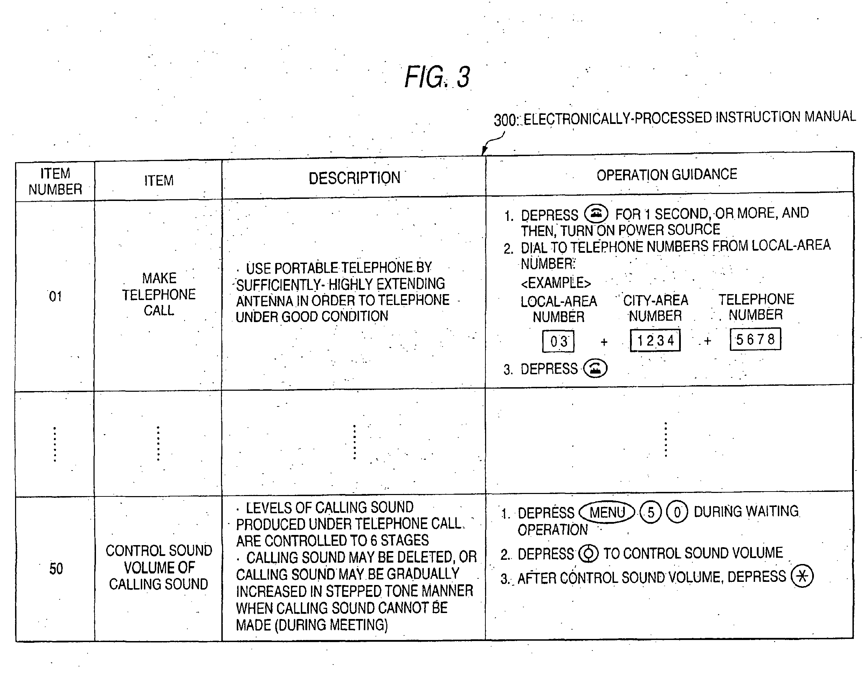

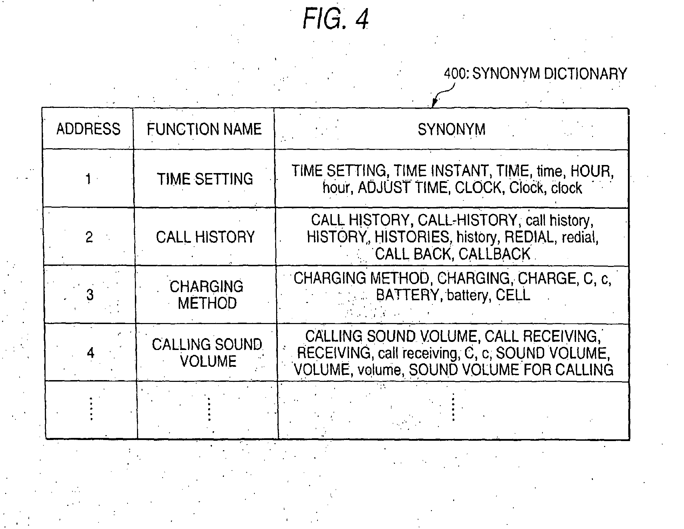

Fig. 1 is a structural diagram for indicating a structure of a portable telephone 100 according to this first embodiment mode. Fig. 2 is a diagram for showing a general view of the portable telephone 100 shown in Fig. 1A. Fig. 3 is an explanatory diagram for concretely exemplifying an electronically-processed instruction manual 300. Fig. 4 is an explanatory diagram for concretely exemplifying a synonym dictionary 400.

In Fig. 1, the portable telephone 100 of this embodiment mode is provided with a display unit 101, a control unit 102, an input unit 103, a voice speaking/receiving unit 104, a storage unit 105, and a telephone transmission/reception unit 106. Also, when a general view (outer view) of the portable telephone 100 is explained with reference to Fig. 2, this portable telephone 100 is provided with a liquid crystal panel 201 installed on a front surface of a housing 202, various sorts of function keys 203 (203a to 203f), and a ten key (10-numeral entry key) 204.

Next, the respective structural elements will now be explained with reference to Fig. 1. First, the input unit 103 is realized by, for example, the various sorts of function keys 203, the ten key 204, and the like. A user operates this portable telephone 100 via this input unit 103. The telephone transmission/reception unit 106 is used to establish a wireless communication via an antenna 107 with a base station of a wireless telephone system. For instance, since the portable telephone 100 is operated and an instruction is inputted by way of the input unit 103 constituted by the various sorts of function keys 203 and the ten key 204, the telephone transmission/reception unit 106 performs such a telephone transmission/reception operation when the user dials with respect to a counter party to whom the user wishes to telephone, and also performs such a telephone transmission/reception operation when the portable telephone 100 is connected to the Internet so as to retrieve data.

Also, the control unit 102 is realized by an MPU (microprocessor), a DSP (digital signal processor), and the like. This control unit 102 controls the respective structural elements of this portable telephone so as to execute a wireless communication processing operation, a voice signal processing operation, a display control operation, a data transmission/reception control operation, a retrieving process operation, and the like.

Also, the storage unit 105 is realized by, for example, either a volatile, or nonvolatile semiconductor memory (RAM, ROM, EEPROM, flash memory), and the like. In this semiconductor memory, in addition to various sorts of data included in general-purpose portable telephones, in particular, both the instruction manual 300 and the synonym 400 have been stored in an electronic manner in this embodiment mode.

In this case, the electronically-processed instruction manual 300 will now be described with reference to Fig. 3. The electronically-processed instruction manual 300 is provided with items, descriptions corresponding to explanations of these items, and operation guidance for explaining operations used to execute functions of these items. Next, the synonym dictionary 400 will now be explained with reference to Fig. 4. The synonym dictionary 400 is arranged by that both names of functions (corresponding to key words of scope of claim), and a plurality of synonyms which may resemble these function names are grouped, and these groups are provided every area of each function name. It should also be noted that words similar to such function names which may be conceived to be entered by a user are prepared as to synonyms, since such a case may be considered, namely the user does not know formal names of these function names.

Also, the voice speaking/receiving unit 104 is realized by a microphone and a speaker, or the like, and performs a telephone communication such as a telephone calling operation and a telephone receiving operation. Furthermore, the display unit 101 (corresponding to a liquid crystal panel 201 shown in Fig. 2) is realized by, for instance, an LCD display panel and the like. This display unit 101 displays thereon messages formed by numerals, characters, and symbols, and also displays thereon images.

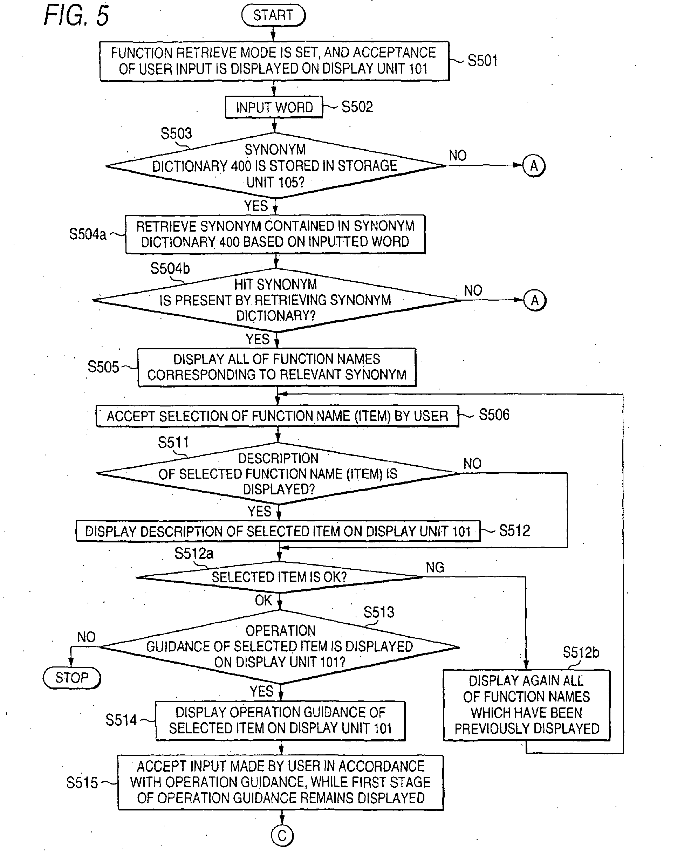

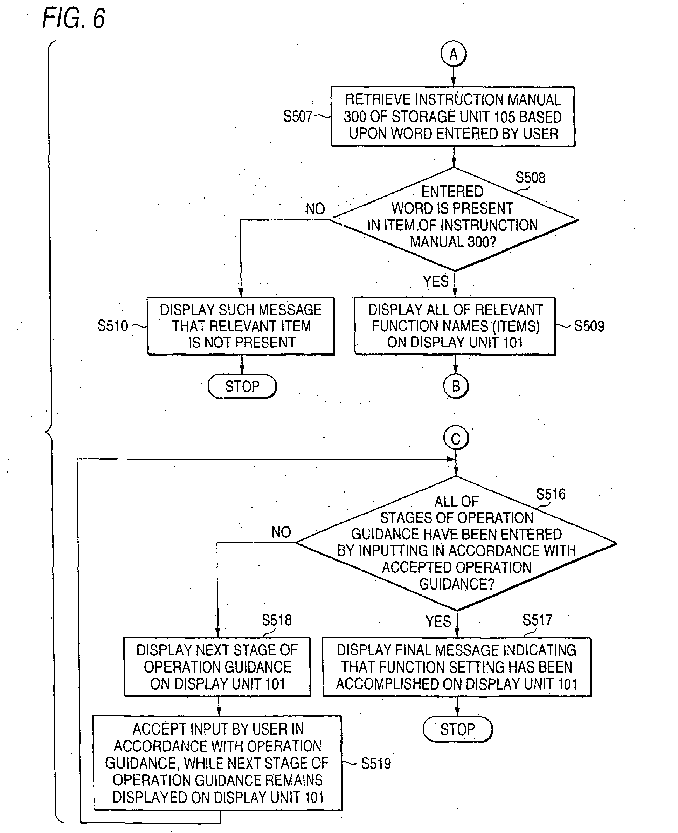

Next, referring now to Fig. 5 and Fig. 6, an information retrieving method executed in the portable telephone 100 according to this embodiment mode will be explained. Fig. 5 and Fig. 6 are flow charts for explaining a retrieving method of the electronically-processed instruction manual 300 in the portable telephone 100. First, in a step S501 of Fig. 5, when the function key 203 for instructing a commencement of a retrieving operation is manipulated by the user, the operation of the portable telephone 100 is advanced to a function retrieve mode in response to this input operation, and an acceptance display is made on the display unit 101 which indicates that the portable telephone 100 is brought into a user input acceptance condition. Next, in a step S502, the various sorts of function keys 203 and the ten key 204 are manipulated by the user, so that such a word is inputted which is most likely used in both an item and a description of a function which is wanted to be retrieved. It should also be noted that after the word has been inputted, when a predetermined function 203 is depressed by the user, the retrieving operation is commenced.

Next, when the synonym dictionary 400 is stored in the storage unit 105 as a result of judgement made in a step S503, the retrieving method is advanced to a step S504a. In this step S504a, when a retrieve starting instruction is entered by manipulating a predetermined function key 203 by the user, the control unit 102 retrieves that the word entered by the user corresponds to a synonym of which region (which address) in the synonym dictionary 400 stored in the storage unit 105. Then, when there is the synonym which is hit in the retrieving operation of the synonym dictionary 400 in a judgement of a step S504b, this retrieving method is advanced to a step S505. Then, in this step S505, all of function names are displayed on the display unit 103, while these function names correspond to the synonyms in the region (address) at which the synonyms relevant to the entered word is located.

Then, in a step S506, when one function name is selected by the user from all of the function names displayed in the step S505, the retrieving method is advanced to a step S511.

Concretely speaking, as indicated in Fig. 4, the synonym dictionary 400 is provided with the synonyms similar to the function names in such a manner that these synonyms are grouped, and the grouped synonyms are prepared in correspondence with the respective function names. As a consequence, in such a case that the user wishes to perform the retrieving operation in the function name of "time setting", when the user knows such a formal name of a function "time setting", the user may merely input the formal name of this function. To the contrary, when the user does not know the formal name of this function, the user uses the synonym dictionary 400. For instance, in such a case that the user inputs "clock", since such a region (address) where a word of "clock" is present in a synonym group is only an address "1" in the synonym dictionary 400, "time setting" is displayed on the display unit 101 as the relevant function name.

Also, for example, in the case that the user wants to retrieve the function of "time setting", when the user inputs a word of "ji (roman character)", since the word of "ji" is located in both a synonym group of a region (address) 3 and another synonym group of a region (address) 4 in addition to the synonym group of the region (address) 1 in the synonym dictionary 400, both "charging method" and "telephone receiving method" corresponding to the function names of the region (address) 3 and the region (address) 4 are also displayed on the display unit 101 in addition to the function name of "time setting". It should also be noted that since there are many function names to be displayed on the display unit 101, if all of these function names cannot be displayed at a time, then all of these function names may be displayed by way of a scrolling display manner, or a page feeding display manner.

On the other hand, either when the synonym dictionary 400 is not stored in the storage unit 105 in the judgement of the step S503 or when there is no such a hit synonym in the retrieving operation of the synonym dictionary 400 in the judgement result of the step S504b, the retrieving method is advanced to a step S507 of Fig. 6.

In this step S507, items of the electronically-processed instruction manual 300 of the storage unit 105 are retrieved by employing the word entered by the user. Then, in such a case that the entered word corresponds to the item contained in the electronically-processed instruction manual 300 in a judgement of a step S508, the retrieving method is advanced to a step S509. In this step S509, all of the relevant function names (items) are displayed on the display unit 101. On the other hand, in such a case that the entered word does not correspond to the item contained in the electronically-processed instruction manual 300 in the judgement of a step S508, the retrieving method is advanced to a step S510 in which such a message is displayed on the display unit 101, while this message indicates such a fact that there is no item corresponding to the inputted word.

Next, returning again back to Fig. 5, in the case that the user selects such an instruction that an explanation of the item displayed in the step S509, or of the function name (item) selected in the step S506 is displayed in a judgement of a step S511, the retrieving method is advanced to a step S512. In the step S512, the electronically-processed instruction manual 300 is retrieved by employing the function name (item) selected by the user, and then, an explanation corresponding to the selected item is displayed on the display unit 101. On the other hand, in the case that the user selects such an instruction that the explanation of the selected item is not displayed in the judgement of the step S511, the retrieving method is advanced to a step S512a. When the user cancels the selected item (step S512a), all of the function names which have been previously displayed are again displayed (step S512b).

When the user selects such an instruction that operation guidance of the selected item is displayed on the display unit 101 in a judgement of a step S513, the process operation is advanced to a step S514 in accordance with this selection. In the step S514, the operation guidance corresponding to the selected item is derived from the electronically-processed instruction manual 300 stored in the storage unit 105 by manipulating a predetermined function key 203 by the user, and then the derived operation guidance is displayed on the display unit 101. On the other hand, when the user selects such an instruction that operation guidance of the selected item is not displayed on the display unit 101 in the judgement of a step S513, the process operation is stopped.

Next, in a step S515, while a first stage of the operation guidance displayed in the step S514 remains displayed on the display unit 101, the user inputs in accordance with the first stage of this operation guidance. Then, in such a case that all of the stages of the operation guidance are accomplished by way of the inputs of the operation guidance by the user in the step S515 in a judgement of a step S516 of Fig. 6, the process operation is advanced to a step S517. In this step S517, a final message for indicating that the function setting operation is accomplished is displayed on the display unit 101.

On the other hand, in the case that all of the stages of the operation guidance have not yet been accomplished by way of the inputs of the operation guidance by the user in the judgement of the step S516 of Fig. 6, the process operation is advanced to a step S518. In this step S518, a next stage of the operation guidance is displayed on the display unit 101. Then, in a step S519, while the next stage of the operation guidance remains displayed on the display unit 101, the user inputs in accordance with this operation guidance. Then, the process operation is returned to the judgement step of the step S516.

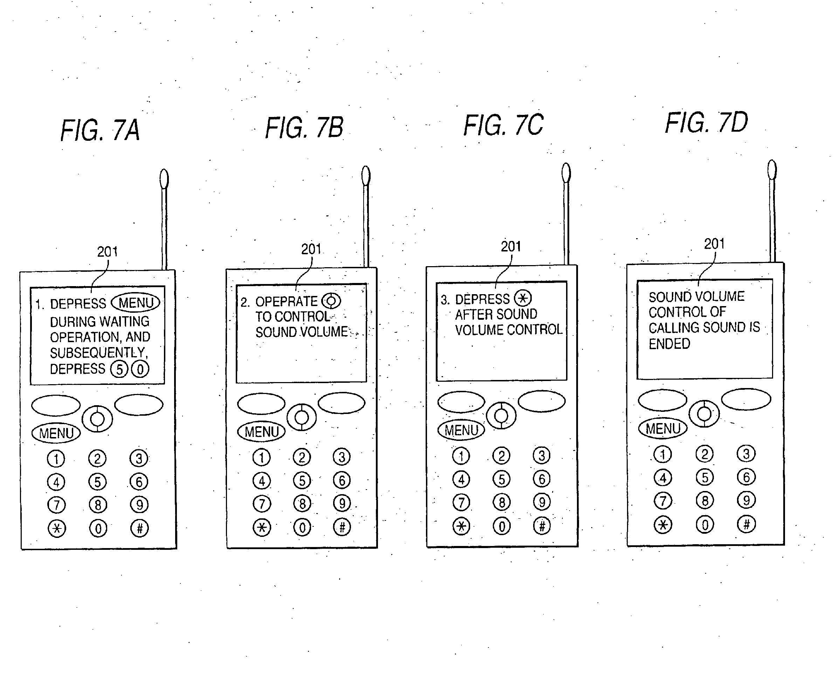

Referring now to Figs. 7A to 7D, the stepwise display methods of the operation guidance defined in the steps S515, S516, S517, S518, and S519 will be explained in a more concrete manner. Figs. 7A, 7B, 7C, and 7D are explanatory diagrams for exemplifying a stepwise display of operation guide. First, as shown in Fig. 7A, when first operation guidance [1. depress menu key during call reception, and subsequently, depress ten keys "5" and "0"] of an item [control volume of calling tone] is displayed on. the display unit 101, while this first operation guidance remains displayed, the user inputs by manipulating the function key 203 and the ten key 204 in accordance with this first operation guidance.

Then, when this user input is completed, as indicated in Fig. 7B, second operation guidance [2. manipulate specific function key 203 (concretely designated by symbols and modes) so as to control sound volume] is subsequently displayed on the display unit 101, while this second operation guidance remains displayed, the user inputs in accordance with the second operation guidance by manipulating the specific function key 203. Then, when this user input is accomplished, as shown in Fig. 7C, third operation guidance [3. after control is ended, depress ∗ key] is displayed, while this third operation guidance remains displayed, the user inputs by manipulating the ∗ key 203 in accordance with this third operation guidance. Then, in the case that input operations in accordance with all of the operation guidance are accomplished and the function setting operations are accomplished, as represented in Fig. 7D, such a final message [volume control of calling sound has been ended] is displayed on the display unit 101.

It should also be noted that in the operation guidance display sequence shown in the steps S515, S516, S517, S518, S519 of Fig. 5 and Fig. 6 of this embodiment mode, the operation guidance of the each stage is sequentially displayed one stage by one stage. Alternatively, all of the stages of the operation guidance may be displayed on the display unit 101 at a time. In any of the above-described cases, the displayed operation guidance is not deleted from the display unit 101 unless the input operation is accomplished by manipulating the predetermined key in accordance with this displayed operation guidance.

Also, in the word input operation by the user defined in the steps S501 and S502 of Fig. 5 in this embodiment mode, when a plurality of words are entered, the electronically-processed instruction manual 300 may be AND-retrieved, or OR-retrieved by using these plural words.

Also, in the item retrieving method defined in the step S508 of Fig. 6 in this embodiment mode, the items of the electronically-processed instruction manual 300 is retrieved by employing the entered word. Alternatively, not only the respective items of the electronic-processed instruction manual 300, but also all of documents such as explanations of items, or operation guidance may be retrieved.

Furthermore, in this embodiment mode, the inventive idea has been applied to the portable telephone as one example of the electric appliance. Alternatively, the inventive idea may be similarly applied to normal telephones and facsimile machines.

As previously explained, in the electric appliance and the information retrieving method of the electric appliance according to this embodiment mode, while the electronically-processed instruction manual 300 which contains the items, the explanations of these items, and the operation guidance for explaining the operations used to execute the functions of the items is stored in the storage unit 105 of the portable telephone 100, when the word is entered by the' user via the input unit 103, the control unit 102 retrieves the item containing the word, or the item corresponding to either the explanation or. the operation guidance, which contains the word, from the instruction manual 300, and then displays the retrieved item on the display unit 101. When the desired item of the user is selected from the displayed item by the input unit 103, the operation guidance of the selected guidance is displayed on the display unit 103, while the operation guidance remains displayed on the display unit 10, the user can input by using the input unit 103 in accordance with this operation guidance.

In the conventional operation guidance presentation method, even when the desirable operation guidance is displayed on the display unit, this operation guidance displayed on the display unit is deleted by switching the input screens at such a stage that the user operates, or inputs in accordance with the operation guidance. As a result, the user must memorize the operation guidance displayed on the display unit, or must write this operation guidance on a memorandum. However, in this embodiment mode, while the operation guidance remains displayed on the display unit 101, since the user can input in accordance with the operation guidance by operating the input unit 103, the user can operate, or input in accordance with this operation guidance while the user visibly confirms the operation guidance displayed on the display unit 101, so that the cumbersome operations of the above-explained memorizing/writing operations by the user can be avoided. As a result, even when children and/or aged persons are users, they can easily utilize various sorts of functions realized in the portable telephone 100 which require the current complex operations. Also, even when the user does not keep the instruction manual of the portable telephone which has been distributed in the booklet format, the various sorts of functions can be readily retrieved/displayed by using the portable telephone 100 itself, so that the functions of this portable telephone 100 can be sufficiently utilized.

Also, in both the electric appliance and the information retrieving method of the electric appliance, according to this embodiment mode, when the operation guidance requires the manipulation or input operation executed by the user plural times, the control unit 102 subdivides the entire operation guidance into plural sets of divided operation guidance in correspondence with either the manipulation or the inputs operation of each user, and displays the plural sets of divided operation guidance on the display means in the stepwise manner. As previously explained, since the entire operation guidance is subdivided into the plural sets of divided operation guidance in correspondence with the manipulation or the input operation of each user and the divided operation guidance is displayed on the display unit 101 in the 'stepwise manner, for instance, in the case that the operation guidance is such a complex operation guidance equipped with plural stages of operation steps, the operation guidance of the next stage is displayed in response 'to either the manipulation or the input operation by the user in such a manner that when the operation guidance of the first stage is displayed on the display unit 101 and then either the manipulation or the input operation of this first stage is accomplished by the user, the operation guidance of the second stage is subsequently displayed on the display unit 101. As a consequence, the user can easily manipulate the portable telephone without having feelings of workloads given to this user.

Also, in the electric appliance and the information retrieving method of the electric appliance, according to this embodiment mode, the storage unit 105 is provided with the synonym dictionary 400 which stores the function names and the synonyms resembling these function names in correspondence with each other. When the control unit 102 retrieves the synonym dictionary 400 as to the word entered by the input unit 103 and then this word is contained in the synonym group of 'the synonym dictionary 400, the control unit 102 retrieves the instruction manual 300 by employing the function name corresponding to the synonym group. As a consequence, in such a case that since the user does not correctly know the formal name of the desirable item of the instruction manual 300, the user inputs such a function name which is slightly different from this desirable item name, either the desirable item of the operation guidance of the instruction manual 300 may be readily displayed on the display unit 101.

### [SECOND EMBODIMENT MODE]

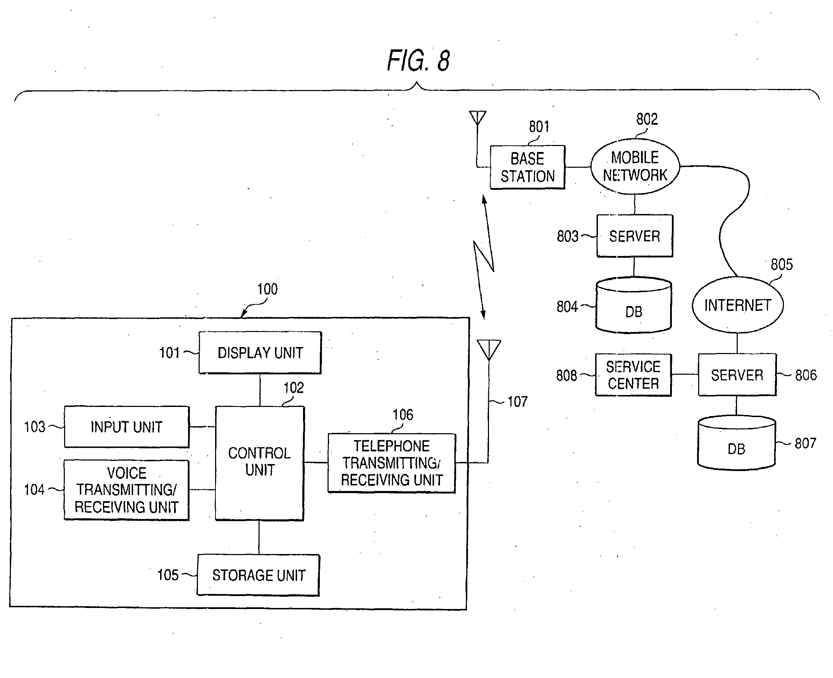

Next, a communication system according to a second embodiment mode of the present invention will now be explained by citing such a structure that an electric appliance is employed as a portable telephone in a similar manner to the first embodiment mode. Fig. 8 is a structural diagram for indicating a structure of the communication system according to the second embodiment mode. The communication system of this embodiment mode is arranged by employing the above-described portable telephone 100 of the first embodiment mode, a base station (Base Station) 801, and a server 803 which is connected via a mobile network 802 to the portable telephone 100 by this base station 801. It should be noted that this server 803 contains a storage unit 804. Also, in this embodiment mode, the control unit 102 of the portable telephone 100 corresponds to an input control means defined in a scope of claim, and the telephone transmission/reception unit 106 of the portable telephone 100 corresponds to a transmission means.

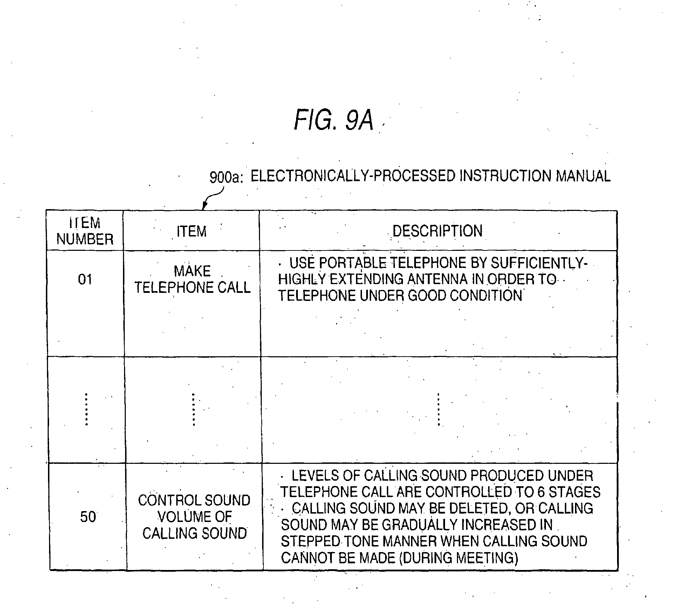

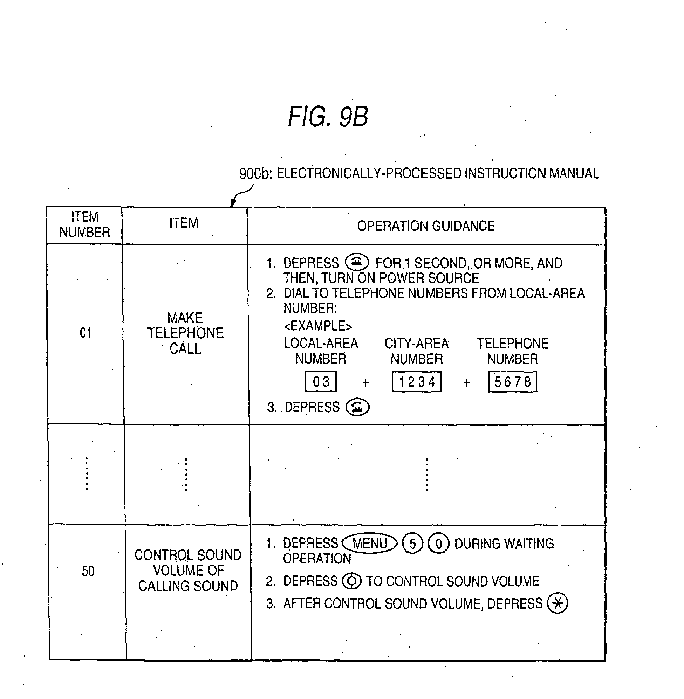

In this case, while the base station 801 is connected via a wireless communication line to the portable telephone 100, this base station 801 may cause the portable telephone 100 to be connected via the mobile network 802 to the server 803. Also, while the server 803 includes the storage unit 804 so as to manage this storage unit 804, both data transmission/reception process operations with respect to the portable telephone 100, and a retrieving process operation of the storage unit 804 are carried out by a retrieve/control means (not shown) in the server 803. Furthermore, in addition to the electronically-processed instruction. manual of the portable telephone 100, electronically-processed instruction manuals of other different sorts of portable telephones are stored in the storage unit 804. These electronically-processed instruction manuals are stored/managed as a database. In this embodiment mode, it is so assumed that both an electronically-processed instruction manual 900a having items and descriptions corresponding to these items with respect of each of the items (see Fig. 9A), and a synonym dictionary 400 are stored in the storage unit 105 of the portable telephone 100. Also, it is so assumed that electronically-processed instruction manual 900b having items and plural sets of operation guidance corresponding to these items with respect to each of the items (see Fig. 9B) has been stored in a storage unit 804 provided on the side of the server 803.

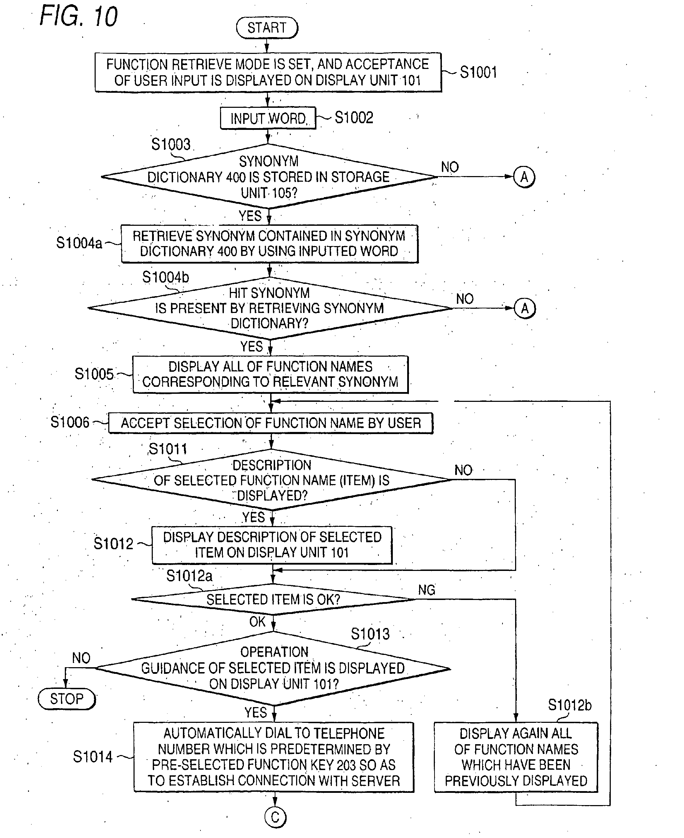

Next, an information retrieving method executed in the communication system according to this embodiment mode will be explained. Fig. 10, 11 and Fig. 12 are flow charts for explaining a retrieving method of the electronically-processed instruction manual in the communication system of this embodiment mode. First, in a step S1001 of Fig. 10, when the function key 203 for instructing a commencement of a retrieving operation is manipulated by the user, the operation of the portable telephone 100 is advanced to a function retrieve mode in response to this input operation, and an acceptance display of a user input is displayed on the display unit 101. Next, in a step S1002, the various sorts of function keys 203 and the ten key 204 are manipulated by the user, so that such a word is inputted which is most likely used in both an item and a description of a function which is wanted to be retrieved. It should also be noted that after the word has been inputted, when a predetermined function 203 is depressed by the user, the retrieving operation is commenced.

Next, when the synonym dictionary 400 is stored in the storage unit 105 as a result of judgement made in a step S1003, the retrieving method is advanced to a step S1004a. In this step S1004a, when a retrieve starting instruction is entered by manipulating a predetermined function key 203 by the user, the control unit 102 retrieves that the word entered by the user corresponds to a synonym of which region (which address) in the synonym dictionary 400 stored in the storage unit 105. Then, when there is such a synonym which is hit in the retrieving operation of the synonym dictionary 400 in a judgement of a step S1004b, this retrieving method is advanced to a step S1005.

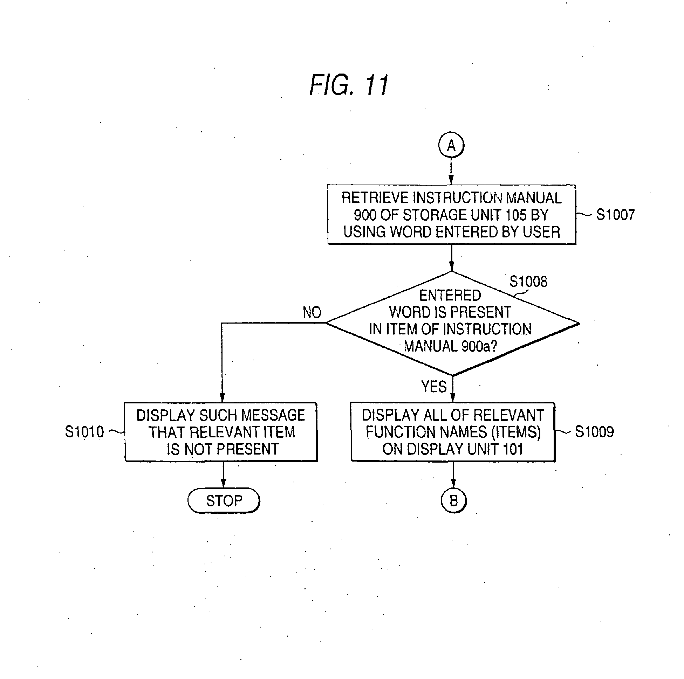

Then, in this step S1005, all of function names are displayed on the display unit 103, while these function names correspond to the synonyms in the region (address) at which the synonyms relevant to the entered word are located. Then, in a step S1006, when one function name is selected by the user from all of the function names displayed in the step S1005, the retrieving method is advanced to a step S1011. It should be noted that a concrete example of the synonym dictionary 400 and a display method for a retrieved item are similar to those of the first embodiment mode. On the other hand, either when the synonym dictionary 400 is not stored in the storage unit 105 in the judgement of the step S1003, or when there is no such a hit synonym in the retrieving operation of the synonym dictionary 400 in the judgement result of the step S1004b, the retrieving method is advanced to a step S1007 of Fig. 11.

In this step S1007, items of the electronically-processed instruction manual 900a of the storage unit 105 are retrieved by employing the word entered by the user. Then, in such a case that the entered word corresponds to the item contained in the electronically-processed instruction manual 900a in a judgement of a step S1008, the retrieving method is advanced to a step S1009. In this step S1009, all of the relevant function names (items) are displayed on the display unit 101. On the other hand, in such a case that the entered word does not correspond to the item contained in the electronically-processed instruction manual 900a in the judgement of a step S1008, the retrieving method is advanced to a step S1010 in which such a message is displayed on the display unit 101, while this message indicates such a fact that there is no item corresponding to the inputted word.

Next, returning again back to Fig. 10, in the case that the user selects such an instruction that a description of the item displayed in the step S1009, or of the function name (item) selected in the step S1006 is displayed in a judgement of a step S1011, the retrieving method is advanced to a step S1012. In the step S1012, the electronically-processed instruction manual 900a is retrieved by employing the function name (item) selected by the user, and then, a description corresponding to the selected item is displayed on the display unit 101. As a result, since the description of this item is displayed on the display unit 101, the user can correctly confirm as to whether or not the item displayed on the display unit 101 corresponds to the desirable item of the user.

On the other hand, in the case that the user selects such an instruction that the description of the selected item is not displayed in the judgement of the step S1011, the retrieving method is advanced to a step S1012a. When the user cancels the selected item (step S1012a), all of the function names which have been previously displayed are again displayed (step S1012b). When the user selects such an instruction that operation guidance of the selected item is displayed on the display unit 101 in a judgement of a step S1013, the process operation is advanced to a step S1014 in accordance with this selection. On the other hand, in such a case that the item of the displayed description is not equal to the item which is not desired by the user in a judgement of the step S1013, or in the case that even when the item of the displayed description corresponds to such an item which is wanted by the user, the user judges that the operation guidance need not be displayed, since the user selects such an instruction that the operation guidance of the selected item is not displayed on the display unit 101, the portable telephone 100 may be returned to the original condition without displaying the operation guidance of the selected item. As a consequence, in such a case, since the portable telephone 100 does not automatically dial to make a telephone call, there is such an effect that a telephone communication fee is not required. Next, in a step S1014, when a predetermined function key 203 in the portable telephone 100 is manipulated by the user, the portable telephone 100 automatically dials a predetermined telephone number in response to this key input so as to establish a line connection between the portable telephone100 and the server 803.

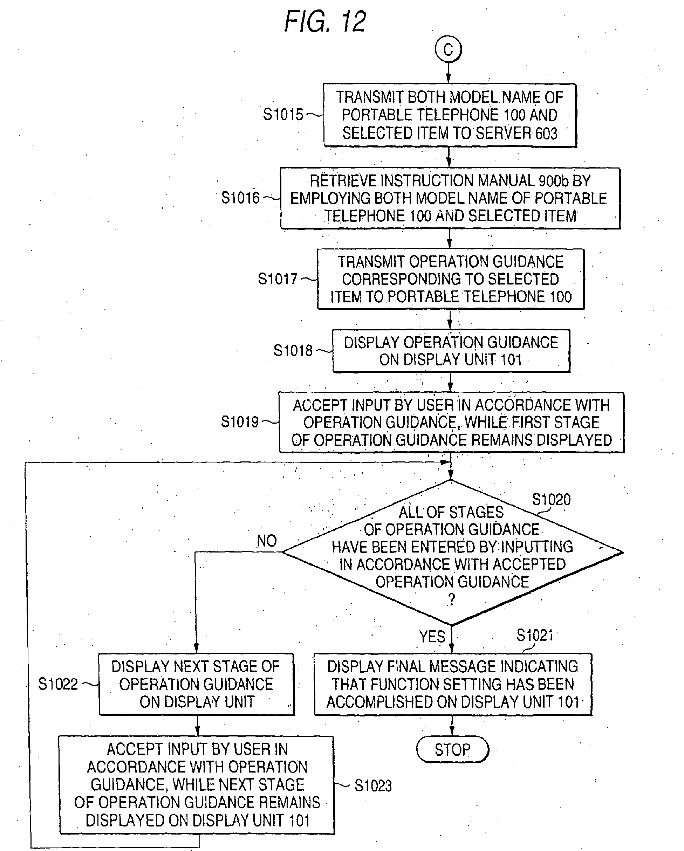

Next, in a step S1015 of Fig. 12, both a model name of the portable telephone 100 and the selected item are transmitted via the telephone transmission/reception unit 106 to the server 803. Then, in a step. S1016, while employing both the model name of the portable telephone 100 and the selected item, which are received by the server 803, the electronically-processed instruction manual 900b of the portable telephone 100 is retrieved which has been stored in the storage unit 804. Then, in a step S1077, operation guidance corresponding to the retrieved item in the step S1016 is transmitted to the portable telephone 100. Then, in a step S1018, the operation guidance received via the telephone transmission/reception unit 106 of the portable telephone 100 is displayed on the display unit 101.

Next, in a step S1019, while a first stage of the operation guidance displayed in the step S1018 remains displayed on the display unit 101, the user inputs in accordance with this operation guidance. Then, in such a case that all of the stages of the operation guidance are accomplished by way of the inputs of the operation guidance in a judgement of a step S1020, the process operation is advanced to a step S1021. In this step S1021, a final message for indicating that the function setting operation is accomplished is displayed on the display unit 101. On the other hand, in the case that all of the stages of the operation guidance have not yet been accomplished by way of the inputs of the operation guidance by the user in the judgement of the step S1020, the process operation is advanced to a step S1022. In this step S1022, a next stage of the operation guidance is displayed on the display unit 101. Then, in a step S1023, while this operation guidance remains displayed on the display unit 101, the user inputs in accordance with this operation guidance. Then, the process operation is returned to the judgement step of the step S1020.

It should be understood that in this embodiment mode, the communication system is arranged by storing the synonym dictionary 400 in the storage unit 105 of the portable telephone 100. Alternatively, the communication system may be arranged by storing the synonym dictionary 400 into the storage unit 804 provided on the side of the server 803.

It should also be noted that in the operation guidance display method shown in the steps S1019, S1020, S1021, S1022, S1023 of Fig. 12 of this embodiment mode, the operation guidance of the each stage is sequentially displayed one stage by one stage. Alternatively, similar to the above-described first embodiment mode, all of the stages of the operation guidance may be displayed on the display unit 101 at a time. In any of the above-described cases, the displayed operation guidance is not deleted from the display unit 101 unless the input operation is accomplished by manipulating the predetermined key in accordance with this displayed operation guidance. Also, concrete operations of the stepwise display method for the operation guidance indicated in the steps S1019, S1020, S1021, S1022, S1023 are similar to the operations indicated in the steps S515, S516, S517, S518, S519 of the first embodiment mode.

Also, in the word input operation by the user defined in the steps S1001 and S1002 of Fig. 10 in this embodiment mode, when a plurality of words are entered, the electronically-processed instruction manual 900 may be AND-retrieved, or OR-retrieved by using these plural words.

Also, in the item retrieving method defined in the step S1008 of Fig. 11 in this embodiment mode, the items of the electronically-processed instruction manual 900a is retrieved by employing the entered word. Alternatively, not only the respective items of the electronic-processed instruction manual 900a, but also all of documents such as explanations of items, or operation guidance may be retrieved.

Alternatively, while a plurality of instruction manuals as to other different sorts of portable telephones different from the portable telephone 100 are stored in the storage unit 804 of the server 803, for instance, the electronically-processed instruction manual 900b of the storage unit 804 of the server 803 is retrieved by employing the model name and the item transmitted from the portable telephone 100 in the step S1015 of Fig. 12. When this item is not contained in this electronically-processed instruction manual 900b, the electronically-processed instruction manuals of other different sorts of portable telephones different from the above-described portable telephone 100, which have been stored in the storage unit 804, may be retrieved by employing this item. When this item is present in the electronically-processed instruction manuals of other sorts of portable telephones, such an instruction information as model numbers and model names of other sorts of portable telephones may be transmitted to the portable telephone 100, and this introduction information may be displayed on the display unit 101.

Also, as a modification of this embodiment mode, the portable telephone may be connected via a communication line such as. the Internet 805 to another server 806 equipped with a storage unit 807. It should be noted that in Fig. 8, while the server 806 is directly coupled to a service center 808 which is operated/managed by the maker of the portable telephone 100, a database contained in the storage unit 807 is managed (updated, maintenance etc.) by the service center 808.

Furthermore, in this embodiment mode, the inventive idea has been applied to the portable telephone as one example of the electric appliance. Alternatively, the inventive idea may be similarly applied to normal telephones and facsimile machines.

As previously explained, in the communication system and the information retrieving method in the communication system according to this embodiment mode, while the communication system is equipped with the portable telephone 100, and the server 803 having the storage unit 804 and connected via the base station 801 to this portable telephone 100, the portable telephone 100 includes the storage unit 105 which stores thereinto the electronically-processed instruction manual 900a of the portable telephone 100, which contains at least the items and the descriptions corresponding to the explanations of the items; the electronically-processed instruction manual 900b stored in the storage unit 804 of the server 803 is provided with at least the items and the operation guidance for explaining the operations for executing the functions of the items; the telephone transmission/reception unit 106 of the portable telephone 100 retrieves the item containing the word by employing the word entered from the input unit 103 from the electronically-processed instruction manual 900a stored in the storage unit 105 of the portable telephone 100, and then transmits either the item or the word to the server 803; and the server 803 retrieves the electronically-processed instruction manual 900b of the storage unit 804 of the server 803 by employing either the received item or the received word; and then transmits the operation guidance obtained by this retrieving operation to the portable telephone 100. Then, in the portable telephone 100, the operation guidance transmitted from the server 803 is received, and the received operation guidance is displayed on the display unit 101. Then, while the operation guidance remains displayed on the display unit 10, the user can input by using the input unit 103 in accordance with this operation guidance.

In the conventional operation guidance representing method, even when the desirable operation guidance is displayed on the display unit, this operation guidance displayed on the display unit is deleted by switching the input screens at such a stage that the user operates, or inputs in accordance with the operation guidance. As a result, the user must memorize the operation guidance displayed on the display unit, or must write this operation guidance on a memorandum. However, in this embodiment mode, while the operation guidance remains displayed on the display unit 101 of the portable telephone 100, since the user can input in accordance with the operation guidance by operating the input unit 103, the user can operate, or input in accordance with this operation guidance while the user visibly confirms the operation guidance displayed on the display unit 101, so that the cumbersome operations of the above-explained memorizing/writing operations by the user can be avoided. As a result, even when children and/or aged persons are users, they can easily utilize various sorts of functions realized in the portable telephone 100 which require the current complex operations.

Then, when the retrieval result is a description for explaining the item desired by the user, since the user reads the description displayed on the display unit 101, the user can judge as to whether or not the item explained in the description displayed on the display unit 101 is identical to the item desired by the user. Also, since the storage unit 804 which stores the instruction manual 900b of the portable telephone 100 is provided on the side of the server 803 connected via the base station 801 to the portable telephone 100, the instruction manual information of the portable telephone 100 can be retrieved without having the instruction manual 900b of the portable telephone 100 on this portable telephone side, namely without holding the operation guidance information corresponding to the item. As a result, the storage capacity of the storage unit 105 of the storage unit 105 of the portable telephone 100 is reduced and the portable telephone 100 can be made compact and in light weight.

Also, in both the communication system and the information retrieving method of the communication system, according to this embodiment mode, when the operation guidance requires the manipulation or input operation executed by the user plural times, on the display unit 101 of the portable telephone 100, the control unit 102 subdivides the entire operation guidance into plural sets of divided operation guidance in correspondence with either the manipulation or the input operation of each user, and displays the plural sets of divided operation guidance on the display unit in the stepwise manner. As previously explained, since the entire operation guidance is subdivided into the plural sets of divided operation guidance in correspondence with the manipulation or the input operation of each user and the divided operation guidance is displayed on the display unit 101 in the stepwise manner when the guidance requires the plural operations, or the plural inputs by the user, even when the complex guidance is employed, the user can easily manipulate the portable telephone without having feelings of workloads given this user.

Also, in the communication system and the information retrieving method of the communication system, according to this embodiment mode, the synonym dictionary 400 which stores the function names and the synonyms resembling these function names in correspondence with each other is provided in either the storage unit 105 of the portable telephone 100 or the storage unit 804 of the server 803. In the telephone transmission/reception unit 106 of the portable telephone 100, when the word entered by the input unit 103 is contained in the synonym of the synonym dictionary 400, the function name corresponding to this synonym is handled as the word. As a consequence, in such a case that the user does not correctly know the formal name of the desirable item of the electronically-processed instruction manual 900, the user inputs such a function name which is slightly different from this desirable item name, either the desirable item of the operation guidance of the electronically-processed instruction manual 900 may be readily displayed.

Also, in the communication system and the information retrieving method of the communication system, according to this embodiment mode, even when the electronically-processed instruction manuals as to other sorts of portable telephones different from the portable telephone 100 are stored in the storage unit 804 of the server 803, in such a case that the function wanted by the user is not provided with the portable telephone 100 used by this user, since the type name of other different sorts of portable telephones having this function wanted by the user is introduced/displayed, the user is requested to purchase another different sort of portable telephone instead of the presently-utilized portable telephone. Then, since the portable telephone which is newly purchased is provided with the desirable function of the user, this user can satisfactorily utilize this newly-purchased portable telephone.

### [MODIFIED EXAMPLE]

This modified example is so arranged by that in the arrangement of the communication system of the second embodiment mode, which is equipped with the portable telephone 100, the base station 801, the server 803, and the storage unit 804 indicated in Fig. 8, the electronically-processed instruction manual 900a is eliminated from the storage unit 105 of the portable telephone 100. As to the arrangement of this modified example other than the storage unit 105, this arrangement is similar to that of the second embodiment mode. Also, it is so assumed that the electronically-processed instruction manual 300 (see Fig. 3) is stored into the storage unit 804 of the server 803. It should be understood that the electronically-processed instruction manual 300 is provided with the items, the descriptions corresponding to the explanations of these items, and the operation guidances used to explain the operations for executing the functions of these items.

With respect to the information retrieving method of the communication system in accordance with this modified example, in the information retrieving method executed in the communication system explained in the second embodiment mode, since this modified example corresponds to such an arrangement made by removing the instruction manual information 900a from the storage unit 105, the steps S1003 to S1006 for indicating the process operations in which both the electronically-processed instruction manual information 300 and the synonym dictionary 400 stored in the storage unit 105 of the portable telephone 100 are retrieved are eliminated in the flow chart of Fig. 10. After a word is entered in the step S1002, the retrieving method is advanced to a step S1014. In this step S1014, a line connection between the portable telephone 100 and the server 803 is established, and then, both the model name of the portable telephone 100 and the word entered by the user are transmitted to the server 803.

Next, as to the steps S1007, S1008, S1009 and S1010 of Fig. 11, while the process operation executed with respect to the electronically-processed instruction manual 900a of the storage unit 105 is replaced by a process operation executed with respect to the electronically-processed instruction manual 300 of the storage unit 804, a retrieving process operation of the instruction manual 300 is firstly carried out by employing the word entered by the user. Then, in such a case that the relevant item is not present in the electronically-processed instruction manual 300 of the storage unit 804, such a message indicative of the fact is transmitted to the portable telephone 100 so as to display this message. To the contrary, in the case that the relevant item is present in the electronically-processed instruction manual 300 of the storage unit 804, this item is transmitted to the portable telephone 100 so as to display this item.

Then, as represented in the steps S1011, S1012, S1013 of Fig. 10 and the steps S1016, S1017, S1018 of Fig. 12, such a process operation is carried out. That is, a communication is established with the server 803 every time the user makes a selection so as to derive desirable data from the storage unit 804 of the server 803. It should also be noted that when a description for explaining the item is displayed on the display unit 101, since the user sees the displayed description, the user can judge as to whether or not the item explained by the description displayed on the display unit 101 is identical to such an item desired by the user.

Next, a display process operation in the display unit 101 defined in the steps S1019 to S1023 of Fig. 12 is carried out. It should also be noted that in this modified example, the synonym dictionary 400 may be stored in the storage unit 804 provided on the side of the server 803. In this case, after the word has been inputted from the user, since the synonym dictionary is stored in the storage unit 804 of the server 803, the retrieving process operation of the instruction manual information 300 with employment of the word entered by the user, which is indicated in the steps S1007, S1008, S1009, S1010, may be merely replaced by the retrieving process operation by the synonym dictionary, which is shown in the steps S1004, S1005, S1006.

As previously explained, in accordance with this modified example, in such a communication system equipped with the portable telephone 100, and the server 803 having the storage nit 804 for storing the instruction manual 300 of this portable telephone 100 and connected via the base station 801 to this portable telephone 100, in the portable telephone 100, the word is inputted from the input unit 103; the word inputted by the input unit 103 is transmitted to the server 803 by the telephone transmission/reception unit 106, whereas in the server 803, the word transmitted from the portable telephone 100 is received; the electronically-processed instruction manual 300 of the portable telephone 100 stored in the storage unit 804 is retrieved by employing this word; the operation guidance obtained by this retrieving process operation is transmitted to the portable telephone 100. Then, in the portable telephone 100, the operation guidance transmitted from the server 803 is received, and the received operation guidance is displayed by the display unit 101. Then, while the operation guidance remains displayed on the display unit 101, the user may operate, or may input in accordance with this operation guidance entered by the input unit 103.

As explained above, the user can operate, or input in accordance with this operation guidance while the user visibly confirms the operation guidance displayed on the display unit 101, so that the cumbersome operations of the conventionally-required memorizing/writing operations by the user can be avoided. As a result, even when children and/or aged persons are users, they can easily utilize various sorts of functions realized in the electric appliance which require the current complex operations.

Also, since the server 803 which is connected via the base station 801 to the portable telephone 100 is provided with the storage unit 804 for storing thereinto the instruction manual 300 of this portable telephone 100, the instruction manual information of the portable telephone 100 can be retrieved while the storage unit 105 of the portable telephone 100 does hot store either the electronically-processed instruction manual 300 or the electronically-processed instruction manual 900a of the portable telephone 100. As a result, the storage capacity of the storage unit 105 of the portable telephone 100 is reduced, so that the portable telephone 100 can be made compact and in light weight.

As a further modification of this modified example, the communication system may be connected via a communication line such as the Internet 805 to another server 806 equipped with the storage nit 807. It should also be noted that in Fig. 8, while the server 806 is directly coupled to the service center 808 which is operated/managed by the maker of this portable telephone 100, the database contained in the storage unit 807 is managed (update, maintenance etc.) by the service center 808.

Finally, the constructions (except for structural elements described in scope of claim) of the present invention will now be summarized which may be conducted from the above-explained embodiment modes:
(1) The electric appliance recited in claim 2, claim 3, or claim 4 of a scope of claims, is featured by that the above-described control means retrieves both the item containing either the word or the keyword, and the word, or the description containing the. keyword, or the item corresponding to the operation guidance from all information of the instruction manual information.
(2) The electric appliance recited in claim 2, claim 3, claim 4, or the above-described item (1), is featured by that when the control means retrieves both the item containing either the word or the keyword, or the description containing either the word or the keyword, or the item corresponding to the operation guidance, the display means of the electric appliance displays only the retrieved item.
(3) The electric appliance recited in claim 2, claim 3, claim 4, or the above-described item (1), or item (2) is featured by that when the items of the instruction manual information has the hierarchical structure, the control means displays the item of the upper-grade hierarchy within the firstly-retrieved items on the display means so as to cause the user to select the upper-grade hierarchical item, and thereafter displays the item of the lower-grade hierarchy than the user-selected item on the display means so as to cause the user to select the lower-grade hierarchical item.
(4) The information retrieving method of the electric appliance recited in claim 6 is featured by that when the operation guidance requires either the manipulations or the input operations by the user plural times, the second display step divides the operation guidance into plural sets of the divided operation guidance in response to either the manipulation or the input operation by each user to display the divided operation guidance in the stepwise manner.
(5) The information retrieving method of the electric appliance recited in claim 5, claim 6, or the above-described item (4), is featured by that
   the control step includes:
   a keyword retrieve step retrieves a synonym dictionary which holds keywords and synonym groups related to the keywords as to the word inputted in the input step; and
   a retrieve step retrieves the instruction manual information by employing a keyword corresponding to the synonym group when the word is contained in the synonym group of the synonym dictionary in the keyword retrieve step.
(6) The information retrieving method of the electric appliance recited in claim 6, the above-described item 4, or 5, is featured by that the retrieve step retrieves both the item containing either the word or the keyword, or the description containing either the word or the keyword, or the item corresponding to the operation guidance from all information of the instruction manual information.
(7) The information retrieving method of the electric appliance recited in claim 6, the above-described item (4), item (5), or item (6), is featured by that when the retrieve step retrieves the item containing either the word or the keyword, or the description containing either the word or the keyword, or the item corresponding to the operation guidance from all information of the instruction manual information, the first display step displays only the retrieved item on the display means.
(8) The information retrieving method of the electric appliance recited in claim 6, the above-described item (4), item (5), item (6), or item (7), is featured by that when the items of the instruction manual information have the hierarchical structure, the first display step displays the item of an upper-grade hierarchy within the firstly-retrieved items on the display means so as to cause the user to select the upper-grade hierarchical item, and thereafter displays the item of a lower-grade hierarchy than the user-selected item on the display means so as to cause the user to select the lower-grade hierarchical item.
(9) A program for causing a computer to execute the information retrieving method of the electric appliance recited in Claim 5, Claim 6, the above-described item (4), item (5), item (6), item (7), or item (8).
(10) A computer-readable recording medium for recording thereon the information retrieving method of the electric appliance recited in Claim 5, Claim 6, the above-described item (4), item (5), item (6), item (7), or item (8) as a program for causing a computer to execute the information retrieving method.
(11) The communication system recited in claim 9 is featured by that the storage means of the server is arranged in such a manner that this storage means belongs to another appliance connected via a predetermined communication means to this communication system.
(12) The information retrieving method in the communication system recited in claim 19 is featured by that the storage means of the server is arranged in such a manner that this storage means belongs to another appliance connected via a predetermined communication means to this communication system.
(13) The information retrieving method in the communication system recited in claim 19, the above-described item (12), or item (20), is featured by that the storage means of the server includes instruction manual information of another sort of an electric appliance different from the electric appliance;
   in the case that the instruction manual information of the electric appliance is retrieved by employing the word transmitted from the electric appliance and no retrieval result is obtained, the retrieve control step retrieves the instruction manual information of another sort of electric appliance different from the electric appliance by using the word to obtain the retrieval result; and
   the input control step displays a model name of the different sort of electric appliance on the display means.
(14) The information retrieving method in the communication system recited in claim 19, the above-described item (12), item (20), or item (13), is featured by that the electric appliance includes storage means for storing thereinto the instruction manual information of the electric appliance, which is provided with at least the item and the description corresponding to the explanation of the item;
   the transmission step retrieves the item containing the word from the instruction manual information of the storage means of the electric appliance by employing the word entered from the input step; and
   the display step displays the retrieval result obtained by the transmission step.
(15) The information retrieving method in the communication system recited in claim 19, the above-described item (12), item (20), item (13), or item (14) is featured by that the electric appliance includes storage means for storing thereinto the instruction manual information of the electric appliance, which is provided with at least the item and the description corresponding to the explanation of the item;
   the instruction manual information stored in the storage means of the server is provided with at least the item, and the operation guidance for explaining operation used to execute the function of the item;
   the transmission step retrieves the item containing the word from the instruction manual information of the storage means of the electric appliance by employing the word entered from the input step, and transmits either the item corresponding to the retrieval item or the word to the server; and
   the retrieve control step retrieves the instruction manual information stored in the storage means of the server by employing either the received item or the received word.
(16) The information retrieving method in the communication system recited in claim 20, the above-described item (13), item (14), or item (15), is featured by that when the operation guidance requires either the manipulations or the input operations by the user plural times, the display step divides the operation guidance into plural sets of divided operation guidance in response to either the manipulation or the input operation by each user to display the divided operation guidance in the stepwise manner.
(17) The information retrieving method in the communication system recited in claim 19, the above-described item (12), item (20), item (13), item (14), item (15), or item (16), is featured by that either one or both of the storage means of the electric appliance and the storage means of the server includes the synonym dictionary which holds the keywords and the synonym groups related to the keywords; and
   when the word inputted by the input step is contained in the synonym group of the synonym dictionary, the transmission step handles the keyword corresponding to the synonym group as the word.
(18) The information retrieving method in the communication system recited in claim 20, the above-described item (13), item (14), item (15), item (16), or item (17) is featured by that either the transmission step or the retrieve control step retrieves both the item containing either the word or the keyword, and the description containing either the word or the keyword, or the item corresponding to the operation guidance from all information of the instruction manual information.
(19) The information retrieving method in the communication system recited in claim 20, the above-described item (13), item (14), item (15), item (16), item (17), or item (18), is featured by that when either the transmission step or the retrieve control step retrieves the item containing either the word or the keyword, or the description containing either the word or the keyword, or the item corresponding to operation guidance, the display step displays only the retrieved item.
(20) The information retrieving method in the communication system recited in claim 20, the above-described item (13), item (14), item (15), item (16), item (17), item (18), or item (19), is featured by that when the items of the instruction manual information have the hierarchical structure, either the transmission step or the retrieve control step displays the item of the upper-grade hierarchy within the firstly-retrieved items on the display means so as to cause the user to select the upper-grade hierarchical item, and thereafter displays the item of the lower-grade hierarchy than the user-selected item on the display means so as to cause the user to select the lower-grade hierarchical item.
(21) A program for causing a computer to execute the information retrieving method in the communication system recited in Claim 19, Claim 20, the above-described item (12), item (13), item (14), item (15), item (16), item (17), item (18), item (19), or item (20).
(22) A computer-readable recording medium for recording thereon the information retrieving method in the communication system recited in Claim 19, Claim 20, the above-described item (12), item (13), item (14), item (15), item (16), item (17), item (18), item (19), or item (20), as a program for causing a computer to execute the information retrieving method.

Next, operations and effects with respect to the listed structural elements of the present invention will now be summarized:

In the information retrieving method related to the above item (4), the program related to the above item (9), and the recording medium related to the above item (10), in the second step, when the operation guidance requires the manipulations or input operations executed by the user plural times, the entire operation guidance is divided into plural sets of divided operation guidance in correspondence with either the manipulation or the input operation of each user, and displays the plural sets of divided operation guidance on the display means in the stepwise manner.

As previously explained, since the entire operation guidance is subdivided into the plural sets of divided operation guidance in correspondence with the manipulation or the input operation of each user and the divided operation guidance is displayed on the display unit in the stepwise manner, even in the case that the operation guidance is such a complex operation guidance, the user can readily manipulate the portable telephone without having any feeling of workloads given to this user. For instance, in the case that the operation guidance is such a complex operation guidance equipped with plural stages of operation steps, the operation guidance of the next stage is displayed in response to either the manipulation or the input operation by the user in such a manner that when the operation guidance of the first stage is displayed on the display unit and then either the manipulation or the input operation of this first stage is accomplished by the user, the operation guidance of the second stage is subsequently displayed on the display unit. As a consequence, the user can easily manipulate the portable telephone without having feelings of workloads given to this user.

Also, in the information retrieving method related to the above item (5), the program related to the above item (9), and the recording medium related to the above item (10), the storage means is provided with the synonym dictionary which stores the function names and the synonyms resembling these function names in correspondence with each other. In the control step, when the synonym dictionary is retrieved as to the word entered by the input step and then this word is contained in the synonym group of the synonym dictionary, the instruction manual information is retrieved by employing the function name corresponding to the synonym group in the retrieve step.

As previously explained, the synonym dictionary stored in the storage means is retrieved as to the word entered in the input step, and when this word is contained in the synonym group of the synonym dictionary, the instruction manual information is retrieved by employing the keyword corresponding to the synonym group by the retrieve step. As a consequence, even in such a case that since the user does not correctly know the formal name of the desirable item of the instruction manual, the user inputs such a function name which is slightly different from this desirable item name, either the desirable item of the operation guidance of the instruction manual information may be readily displayed.

Also, in the communication system related to the above item (11), the information retrieving method related to the above item (12), the program related to the above item (21), and the recording medium related to the above item (22), the storage means of the server is arranged in such a manner that this storage means belongs to another appliance connected via a predetermined communication means to this communication system.

As explained above, the storage means of the server, into which the instruction manual information of the electric appliance has been stored, may be arranged in such a manner that this storage means belongs to an arbitrary appliance connected via a predetermined communication means to this communication system. For example, this storage means may be arranged in such a manner that the storage means belongs to a server which is directly coupled to a service center operated/managed by a maker of this electric appliance. Furthermore, this storage means may belong to distributed type databases which are distributed/arranged in storage means of plural servers. Since such an arrangement is employed, the user desirable information may be firmly provided.

Also, in the information retrieving method related to the above item (13), the program related to the above item (21), and the recording medium related to the above item (22), the storage means of the server includes instruction manual information of another sort of an electric appliance different from the electric appliance; in the case that in the retrieve control step, the instruction manual information of the electric appliance is retrieved by employing the word transmitted from the electric appliance and no retrieval result is obtained, the instruction manual information of another sort of electric appliance different from the electric appliance is retrieved by using the word to obtain the retrieval result; and in the input control step, a model name of the different sort of electric appliance is displayed on the display means.

As previously explained, in such a case that the function wanted by the user is not provided with the electric appliance used by this user, since the type name of another different sort of electric appliance having this function wanted by the user is introduced/displayed, the user may be requested to purchase another different sort of electric appliance instead of the presently-utilized electric appliance.

Also, in the information retrieving method related to the above item (14), the program related to the above item (21), and the recording medium related to the above item (22), the electric appliance is arranged by employing the storage means for storing thereinto the instruction manual information of the electric appliance, which is provided with at least the item and the description corresponding to the explanation of the item; in the transmission step of the electric appliance, the item containing the word is retrieved from the instruction manual information of the storage means of the electric appliance by employing the word entered from the input step; and in the display step of the electric appliance, the retrieval result obtained by the transmission step is displayed. As previously described, in the case that the operation can be predicted only by the function explanation of the item by displaying the description of the item on the display means, the purpose of user may be achieved at this display stage, and thus, an access operation to the server is no longer required.

Also, in the information retrieving method related to the above item (15), the program related to the above item (21), and the recording medium related to the above item (22), the electric appliance is arranged by employing the storage means for storing thereinto the instruction manual information of the electric appliance, which is provided with at least the item and the description corresponding to the explanation of the item; the instruction manual information stored in the storage means of the server is provided with at least the item, and the operation guidance for explaining operation used to execute the function of the item; in the transmission step of the electric appliance, the item containing the word is retrieved from the instruction manual information of the storage means of the electric appliance by employing the word entered from the input step, and either the item corresponding to the retrieval item or the word is transmitted to the server; and in the retrieve control step of the server, the instruction manual information stored in the storage means of the server is retrieved by employing either the received item or the received word.

As explained above, since such a distributed type database is arranged in such a manner that operation guidance is distributed on the server side and the descriptions contained in the instruction manual information are distributed on the electric appliance side, the user confirms the function of the item based upon the description information on the electric appliance side, and thereafter, the user accesses the storage means provided on the server side. In other words, since either the investigated item or the investigated word is transmitted to the server side so as to retrieve the operation guidance, the frequency of communications established between the electric appliance and the server can be suppressed.

Also, in the information retrieving method related to the above item (16), the program related to the above item (21), and the recording medium related to the above item (22), in the display step of the electric appliance, when the operation guidance requires either the manipulations or the input operations by the user plural times, the operation guidance is divided into plural sets of the divided operation guidance in response to either the manipulation or the input operation by each user to display the divided operation guidance in the stepwise manner.

As previously described, when the operation guidance requires either the manipulations or the .input operations by the user plural times, this operation guidance is subdivided into plural sets of the divided operation guidance in response to either the manipulation or the input operation by each user, and then, the plural sets of the subdivided operation guidance are displayed on the display means in. the stepwise manner. Accordingly, even when complex operation guidance is employed, the user can readily manipulate the electric appliance without having any feeling of the workload given to the user. For instance, in the case that the operation guidance is such a complex operation guidance equipped with plural stages of operation steps, the operation guidance of the next stage is displayed in response to either the manipulation or the input operation by the user in such a manner that when the operation guidance of the first stage is displayed on the display unit and then either the manipulation or the input operation of this first stage is accomplished by the user, the operation guidance of the second stage is subsequently displayed on the display unit. As a consequence, the user can easily manipulate the portable telephone without having feelings of workloads given to this user.

Also, in the information retrieving method related to the above item (17), the program related to the above item (21), and the recording medium related to the above item (22), either one or both of the storage means of the electric appliance and the storage means of the server is arranged by employing the synonym dictionary which holds the keywords and the synonym groups related to the keywords; and in the transmission step of the electric appliance, when the word inputted by the input step is contained in the synonym group of the synonym dictionary, the keyword corresponding to the synonym group is handled as the word.

As previously explained, while the synonym dictionary stored in the storage means is retrieved as to the word inputted by the input step, when this word is contained in the synonym group of the synonym dictionary, the instruction manual information is retrieved by using the keyword corresponding to the synonym group in the retrieve step. As a consequence, in such a case that since the user does not correctly know the formal name of the desirable item of the instruction manual, the user inputs such a function name which is slightly different from this desirable item name, either the desirable item or the operation guidance of the instruction manual may be readily displayed.

It should be understood that the present patent application has been made based upon Japanese Patent Application No. 2001-165201 filed on May 31, 2000, and the contents of which have been incorporated hereinto as references.

### <INDUSTRIAL APPLICABILITY>

As previously described, in accordance with the electric appliance, the information retrieving method of the electric appliance, the information retrieving program, and the recording medium of the present invention, the word is entered by the input means (input step); the control means (control step) retrieves the instruction manual information of the electric appliance stored in the storage means by employing the word entered in the input means (input step), and derives the retrieval result obtained by the retrieving operation; and the display means (display step) displays the retrieval result. Then, the control means (control step) can input by the input means in accordance with the retrieval result, while the retrieval result remains displayed on the display means (display step).

Also, in accordance with the present invention, as the instruction manual information, the item, the description corresponding to the explanation of the item, and the operation guidance used to explain operation for executing the function of the item are provided: in the control means (control step), the retrieve step retrieves the item containing the word, the description containing the word, or the item corresponding to the operation guidance from the instruction manual information; the first display step displays the item retrieved in the retrieve step on the display means; the second display step in which when the item desired by the user is selected from the item displayed in the first display step, the operation guidance of the selected item is displayed on the display means; and the input control step is capable of inputting in accordance with the operation guidance, while the operation guidance remains displayed on the display means.

As a consequence, while the user visibly confirms the retrieval result displayed on the display means, the user can execute the manipulation or the input operation in accordance with this retrieval result. Accordingly, for example, when the retrieval result corresponds to the description for explaining the item desired by the user, the user can understand the function as to this item by reading the description displayed on the display means. Also, when the retrieval result corresponds to the operation guidance, the user can operate, or input in accordance with this operation guidance while the user visibly confirms the operation guidance displayed on the display unit, the user can easily utilize various sorts of functions realized in the electric appliance which require the current complex operations.

Also, in accordance with the present invention, in the control means (second display step), in the case that the operation guidance requires either the manipulations executed by the user plural times or the input operations by the user plural times, the control means divides the operation guidance into plural sets of the divided operation guidance in response to each of the manipulations, or the input operations by the user, and displays the plural sets of the divided operation guidance on the display means in the stepwise manner. As a result, even when the complex operation guidance is used, the user can easily manipulate the electric appliance without having any feelings of the workload given to this user.

Also, in accordance with the present invention, the storage unit is provided with the synonym dictionary which stores the function names and the synonyms resembling these function names in correspondence with each other. In the control means (control step), the synonym dictionary is retrieved as to the word entered by the input means (input step) by the keyword retrieve step, and then when this word is contained in the synonym group of the synonym dictionary, the instruction manual is retrieved by employing the keyword corresponding to the synonym group (by retrieve step). As a consequence, in such a case that since the user does not correctly know the formal name of the desirable item of the instruction manual information, the user inputs such a word which is slightly different from this desirable item name, either the desirable item or the operation guidance of the instruction manual information may be readily displayed.

Also, in accordance with the communication system, the information retrieving method, the information retrieving program, and the recording medium, in the electric appliance, the word is inputted by the input means (input step); the word inputted by the input means (input step) is transmitted to the server by the transmission means (transmission step). In the server, the word transmitted from the electric appliance is received, the instruction manual information of the electric appliance stored in the storage means is retrieved by using this word, and the retrieval result obtained in this retrieving operation is sent to the electric appliance by the retrieve control means (retrieve control step). Then, in the electric appliance, the retrieval result transmitted from the server by the transmission means (transmission step) is received, and the received operation guidance is displayed by the display means (display step). Then, while the retrieval result remains displayed on the display means, the user may operate, or may input in accordance with this retrieval result entered by the input means by input control means (input control step). As a consequence, the user can operate, or input in accordance with this retrieval result while 'the user visibly confirms the retrieval result displayed on the display means. Accordingly, for example, in the case that the retrieval result corresponds to the operation guidance', the user can operate, or input in accordance with this operation guidance while the user visibly confirms the operation guidance displayed on the display unit, the user can easily utilize various sorts of functions realized in the electric appliance which require the current complex operations.

Also, since the storage means for storing thereinto the instruction manual information of the electric appliance is provided with the server side connected via a predetermined communication means to the electric appliance, the instruction manual information of the electric appliance can be retrieved without providing this instruction manual information on the electric appliance side. As a result, the electric appliance can be made compact and in light weight.

Also, in accordance with the present invention, the storage means of the server, into which the instruction manual information of the electric appliance has been stored, is arranged in such a manner that this storage means belongs to an arbitrary appliance connected via a predetermined communication means to this communication system. Furthermore, this storage means may be realized as such distributed type databases which are distributed/arranged in the storage means of the plural servers. Since such an arrangement is employed, the information desired by the user can be firmly provided.

Also, in accordance with the present invention, the instruction manual information includes the item, the description corresponding to the explanation of the item, and the operation guidance used to explain operation for executing the function of the item; the retrieve control means (retrieve control step) retrieves the item containing the word, the description containing the word, or the item corresponding to the operation guidance from the instruction manual information; and the input control means (input control step) displays the retrieval result on the display means; and when the item desired by the user is selected from the displayed item, the input control means (input control step) displays the operation guidance of the selected item on the display means, and is capable of inputting in accordance with the operation guidance by the input means, while the operation guidance remains displayed on the display means. Therefore, while the user visibly confirms the operation guidance displayed on the display means, the user can perform the manipulation, or the input operation in accordance with this operation guidance. As a result, the user can easily utilize the various sorts of functions employed in the currently-available electric appliance which requires the complex operations.

Also, in accordance with the present invention, the storage means of the server includes the instruction manual information of another sort of an electric appliance different from the electric appliance; in the case that the retrieve control means (retrieve control step) retrieves the instruction manual information of the electric appliance by employing the word transmitted from the electric appliance and no retrieval result is obtained, the retrieve control means (retrieve control step) retrieves the instruction manual information of another sort of the electric appliance different from the electric appliance by using the word to obtain the retrieval result; and the input control means (input control step) displays the model name of the different sort of electric appliance on the display means. Accordingly, the electric appliance which is presently used by the user can be required to purchase another sort of the electric appliance having the desirable function.

Also, in accordance with the present invention, the electric appliance is arranged by employing the storage means for storing thereinto the instruction manual information of the electric appliance, which is provided with at least the item and the description corresponding to the explanation of the item; the transmission means (transmission step) of the electric appliance retrieves the item containing the word from the instruction manual information of the storage means of the electric appliance by employing the word entered from the input means (input step); and the display means (display step) of the electric appliance displays the retrieval result obtained by the transmission means (transmission step). As a result, when the operation may be predicted only by the function explanation of the item, the purpose of user may be achieved at this display stage, and therefore, the access operation to the server is no longer required.

Also, in accordance with the present invention, the electric appliance is arranged by employing the storage means for storing thereinto the instruction manual information of the electric appliance, which is provided with at least the item and the description corresponding to the explanation of the item; and the instruction manual information stored in the storage means of the server is provided with at least the item, and the operation guidance for explaining operation used to execute the function of the item, so that such distributed type databases are constituted in such a manner that the instruction manual information is distributedly arranged on both the electric appliance side and the server side. Further, the transmission means (transmission step) of the electric appliance retrieves the item containing the word from the instruction manual information of the storage means of the electric appliance by employing the word entered from the input means (input step), and transmits either the item corresponding to the retrieval item or the word to the server and the retrieve control means (retrieve control step) of the server retrieves the instruction manual information stored in the storage means of the server by employing either the received item or the received word. As a result, the user can confirm the function of the item based upon the description information on the electric appliance side, and thereafter, the user can access the storage means provided on the server side. In other words, since either the investigated item or the investigated word is transmitted to the server side so as to retrieve the operation guidance, the frequency of communications established between the electric appliance and the server can be suppressed.

Also, in accordance with the present invention, in the display means (display step) of the electric appliance, when the operation guidance requires either the manipulations or the input operations by the user plural times, the display means (display step) of the electric appliance divides the operation guidance into plural sets of the divided operation guidance in response to either the manipulation or the input operation by each user to display the divided operation guidance in the stepwise manner. As a consequence, even when the complex operation guidance is employed, the user can readily operate the electric appliance without having any feelings of the workload given to this user.

Also, in accordance with the present invention, either one or both of the storage means of the electric appliance and the storage means of the server is arranged by employing the synonym dictionary which holds the keywords and the synonym groups related to the keywords; and when the word inputted by the input means (input step) is contained in the synonym group of the synonym dictionary, the transmission means (transmission step.) of the electric appliance handles the keyword corresponding to the synonym group as the word. As a result, since the user does not correctly know the formal name such as the desirable item of the instruction manual information, even when the user inputs such a word which is slightly different from this item name, the electric appliance can easily display either the desirable item or the desirable operation guidance of the instruction manual information.

## Claims

1. An electric appliance comprising:
storage means for storing instruction manual information of said electric appliance;
input means;
control means for retrieving the instruction manual information of said electric appliance stored in the storage means by employing a word entered in said input means, and for deriving a retrieval result obtained by said retrieving operation; and
display means for displaying thereon the retrieval result derived by said control means;
wherein said control means can input by said input means in accordance with the retrieval result, while said retrieval result remains displayed on said display means.

2. The electric appliance as claimed in claim 1,
wherein said instruction manual information include an item, a description corresponding to an explanation of said item, and operation guidance used to explain operation for executing a function of said item, and
wherein said control means retrieves an item containing said word, a description containing said word, or' an item corresponding to the operation guidance from said instruction manual information, displays the retrieval result on the display unit, and when an item desired by a user is selected from said displayed item by said input means, the control means displays operation guidance of said selected item on said display means so as to input words by said input means in accordance with said displayed operation guidance while said operation guidance remains displayed on said display means.

3. The electric appliance as claimed in claim 2,
wherein, in the case that said operation guidance requires either manipulations executed by the user plural times or input operations by the user plural times, said control means divides said operation guidance into plural sets of divided operation guidance in response to each of the manipulations, or the input operations by the user, and displays the plural sets of divided operation guidance on the display means in a stepwise manner.

4. The electric appliance as claimed in any of claims 1 to 3,
wherein said storage means contains a synonym dictionary which holds keywords and synonym groups related to said keywords in correspondence with each other, and
wherein, when a word entered by said input means is involved in the synonym group of said synonym dictionary, said control means retrieves said instruction manual information by employing the keyword corresponding to said synonym group.

5. An information retrieving method of an electric appliance, comprising:
an input step;
a control step for retrieving instruction manaual information of said electric appliance stored in a storage means by employing a word entered in said input step, and for deriving a retrieval result obtained by said retrieving operation; and
a display step for displaying the retrieval result derived by said control step on a display means;
wherein said control step can input words in accordance with the retrieval result in said input step, while said retrieval result remains displayed on said display means.

6. The information retrieving method of an electric appliance as claimed in claim 5,
wherein said instruction manual information include an item, a description corresponding to an explanation of said item, and operation guidance used to explain operation for executing a function of said item; and
wherein said control step includes:
a retrieve step for retrieving an item containing said word, a description containing said word, or an item corresponding to the operation guidance from said instruction manual information;
a first display step for displaying the item retrieved in said retrieve step on said display means;
a second display step in which when an item desired by a user is selected from the item displayed in said first display step, operation guidance of said selected item is displayed on the display means; and
an input control step capable of inputting in accordance with said operation guidance, while said operation guidance remains displayed on said display means.

7. A program for causing a computer to execute the information retrieving method of the electric appliance recited in Claim 5, or Claim 6.

8. A computer-readable recording medium for recording thereon the information retrieving method of the electric appliance recited in Claim 5, or Claim 6 as a program for causing a computer to execute said information retrieving method.

9. A communication system comprising:
an electric appliance; and
a server which is connected via a predetermined communication means to said electric appliance;
wherein said server includes storage means for storing instruction manual information of said electric appliance, and retrieve control means for receiving a word transmitted from said electric appliance, for retrieving the instruction manual information of said electric appliance stored in the storage means by employing said word, and for transmitting a retrieval result obtained by said retrieving operation, and
wherein said electric appliance includes input means, transmission means for transmitting said word entered by said input means to said server and for receiving said retrieval result transmitted from said server, display means for displaying said received retrieval result, and input control means capable of inputting in accordance with said retrieval result by said input means, while said retrieval result remains displayed on said display means.

10. The communication system as claimed in claim 9
wherein said instruction manual information includes an item, a description corresponding to an explanation of said item, and operation guidance used to explain operation for executing a function of said item
wherein said retrieve control means retrieves an item containing said word, a description containing said word, or an item corresponding to the operation guidance from said instruction manual information, and
wherein said input control means displays said retrieval result on said display means, and when an item desired by a user is selected by said input means from said displayed item, said input control means displays operation guidance of said selected item on said display means, and is capable of inputting in accordance with said operation guidance by said input means, while said operation guidance remains displayed on said display means.

11. The communication system as claimed in claim 9, or claim 10,
wherein the storage means of said server include instruction manual information of another sort of an electric appliance different from said electric appliance,
wherein, in the case that said retrieve control means retrieves the instruction manual information of said electric appliance by employing the word transmitted from the electric appliance and no retrieval result is obtained, said retrieve control means retrieves the instruction manual information of said another sort of electric appliance different from the electric appliance by using said word to obtain said retrieval result, and.
wherein said input control means displays a model name of said different sort of electric appliance on said display means.

12. The communication system as claimed in any of claims 9 to claim 11,
wherein said electric appliance includes storage means for storing the instruction manual information of said electric appliance, which is provided with at least an item and a description corresponding to an explanation of said item,
wherein the transmission means of said electric appliance retrieves an item containing said word from the instruction manual information of the storage means of said electric appliance by employing the word entered from said input means, and
wherein the display means of said electric appliance displays a retrieval result obtained by said transmission means.

13. The communication system as claimed in any of claims 9 to 12,
wherein said electric appliance includes storage means for storing the instruction manual information of said electric appliance, which is provided with at least an item and a description corresponding to an explanation of said item,
wherein the instruction manual information stored in the storage means of said server is provided with at least an item, and operation guidance for explaining operation used to execute a function of said item,
wherein the transmission means of said electric appliance retrieves an item containing said word from the instruction manual information of the storage means of said electric appliance by employing the word entered from said input means, and transmits either an item corresponding to said retrieval item or said word to said server, and
wherein the retrieve control means of said server retrieves the instruction manual information stored in the storage means of said server by employing either the received item or the received word.

14. The communication system as claimed in any of claims 10 to 13,
wherein, when said operation guidance requires either manipulations or input operations by the user plural times, the display means of said electric appliance divides said operation guidance into plural sets of divided operation guidance in response to either the manipulation or the input operation by each user to display the divided operation guidance in a stepwise manner.

15. The communication system as claimed in any of claims 9 to 14,
wherein either one or both of the storage means of said electric appliance and the storage means of said server includes a synonym dictionary which holds keywords and synonym groups related to said keywords, and
wherein, when the word inputted by said input means is contained in a synonym group of said synonym dictionary, the transmission means of said electric appliance handles a keyword corresponding to said synonym group as said word.

16. The communication system as claimed in any of claims 10 to 15,
wherein either the transmission means of said electric appliance or the retrieve control means of said server retrieves both an item containing either said word or said keyword, and a description containing either said word or said keyword, or an item corresponding to operation guidance from all information of said instruction manual information.

17. The communication system as claimed in any of claims 10 to 16,
wherein, when either the transmission means of said electric appliance or the retrieve control means of said server retrieves an item containing either said word or said keyword, or a description containing either said word or said keyword, or an item corresponding to operation guidance, the display means of said electric appliance displays only the retrieved item.

18. The communication system as claimed in any of the claims 10 to 17,
when the items of said instruction manual information have a hierarchical structure, either the transmission means of said electric appliance or the retrieve control means of said server displays an item of an upper-grade hierarchy within the firstly-retrieved items on said display means so as to cause the user to select said upper-grade hierarchical item, and thereafter displays an item of a lower-grade hierarchy than said user-selected item on said display means so as to cause the user to select said lower-grade hierarchical item.

19. An information retrieving method in a communication system equipped with an electric appliance, and a server which is connected via a predetermined communication means to said electric appliance, comprising:
an input step;
a transmission step for transmitting a word inputted by said input step to said server;
a retrieve control step for receiving the word transmitted from said electric appliance, for retrieving the instruction manual information of said electric appliance stored in the storage means by employing said word, and for transmitting a retrieval result obtained by said retrieving operation to said electric appliance;
a reception step for receiving said retrieval result transmitted from said server;
a display step for displaying said received retrieval result on display means; and
an input control step capable of inputting in accordance with said retrieval result by input means, while said retrieval result remains displayed on said display means.

20. The information retrieving method in a communication system as claimed in claim 19,
wherein said instruction manual information includes an item, a description corresponding to an explanation of said item, and operation guidance used to explain operation for executing a function of said item,
wherein said retrieve control step retrieves an item containing said word, a description containing said word, or an item corresponding to the operation guidance from said instruction manual information, and
wherein said input controls step displays said retrieval result on said display means; and when an item desired by a user is selected from said displayed item, said input control step displays operation guidance of said selected item on said display means, and is capable of inputting in accordance with said operation guidance by said input means, while said operation guidance remains displayed on said display means.

21. A program for causing a computer to execute the information retrieving method in the communication system recited in Claim 19, or Claim 20.

22. A computer-readable recording medium for recording thereon the information retrieving method in the communication system recited in Claim 19, or Claim 20 as a program for causing a computer to execute said information retrieving method.

23. An electric appliance comprising:
input means;
transmission means for transmitting a word inputted by said input means to a server, and for receiving a retrieval result retrieved by said server;
display means for displaying thereon said received retrieval result; and
input control means capable of inputting in accordance with said retrieval result by said input means, while said retrieval result remains displayed on said display means.

24. The electric appliance as claimed in claim 23
wherein said electric appliance includes storage means containing a synonym dictionary which holds keywords and synonym groups related to said keywords in correspondence with each other, and
wherein, when the word entered by said input means is involved in the synonym group of said synonym dictionary, said transmission means handles a keyword corresponding to said synonym group, as said word.
